# EUROPÄISCHE PATENTSCHRIFT

(11) **EP 0 911 942 B1**
(45) Veröffentlichungstag und Bekanntmachung des Hinweises auf die Patenterteilung: **19.03.2003**
(21) Anmeldenummer: 98118722.2
(22) Anmeldetag: 02.10.1998
(51) Int. Cl.: H02J 9/06

(54) **Verfahren und Schaltungsanordnung zur kurzzeitigen Aufrechterhaltung einer Ausgangsspannung bei Ausfällen einer Eingangsspannung mittels eines Autarkiekondensators**
Method and circuit arrangement for momentarily maintaining an output voltage by means of an autarky capacitor in case of failure of the input voltage
Méthode et circuit pour maintenir momentanément la tension de sortie par un condensateur d'autarcie en cas de coupure de la tension d'entrée

(30) Priorität: 22.10.1997 DE 19746546
(43) Veröffentlichungstag der Anmeldung: 28.04.1999
(73) Patentinhaber: Conti Temic microelectronic GmbH, 90411 Nürnberg (DE)
(72) Erfinder: Fendt, Günter, 86529 Schrobenhausen (DE); Herz, Manfred, 55130 Main-Laubenheim (DE)

(56) Entgegenhaltungen:
- EP-A- 0 183 597
- EP-A- 0 562 772
- DE-A- 19 542 085

## Beschreibung

Die Erfindung betrifft ein Verfahren sowie eine schaltungsanordnung zur kurzzeitigen Aufrechterhaltung einer Ausgangsspannung bei Ausfällen einer Eingangsspannung mittels eines Autarkiekondensators.

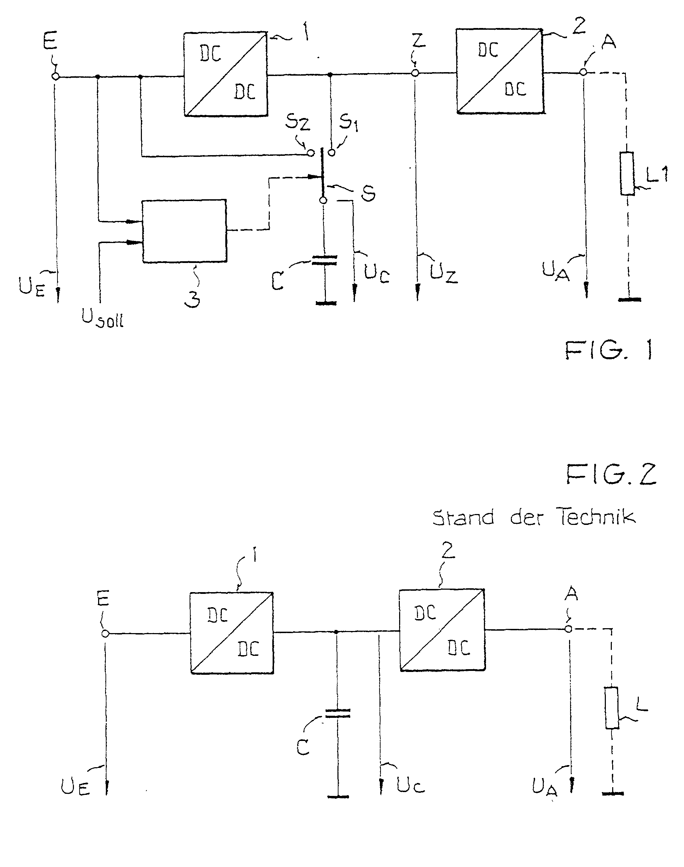

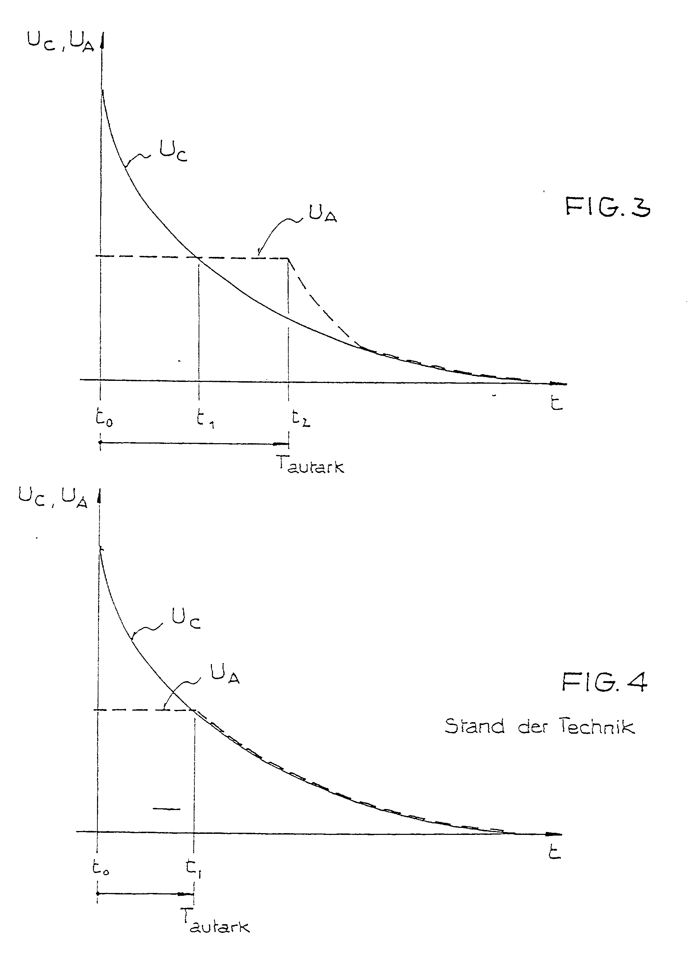

Aus der DE 195 42 085 A1 wie auch der EP 0183597 A1 sind bereits derartige Autarkiekondensatorschaltungen bekannt. Die Zwischenschaltung von DC/DC-wandlern ermöglicht eine gegenüber der Ein- und Ausgangsspannung erhöhte Kondensatorspannung, was bei konstanter Ladungsmenge eine Verkleinerung der Kapazität ermöglicht. Eine solche Schaltungsanordnung wird in Figur 2 gezeigt. Die Eingangsspannung (Ue) wird von einem DC/DC-Aufwärtswandler (1) auf eine höhere dem Autarkiekondensator (C) zugeführte Kondensatorspannung (Uc) transformiert. Das Spannungsniveau wird dabei stabilisiert und ist von der Eingangsspannung (Ue) weitgehend unabhängig. Die Kondensatorspannung (Uc) wird von einem DC/DC-Abwärtswandler (2) auf das vorgegebene Niveau der Ausgangsspannung (Ua) transformiert und dem Lastelement (L) zugeführt. Die in Figur 4 gezeigte Entladekurve des Autarkiekondensators (Uc) macht den Nachteil der Anordnung deutlich, da die Autarkiezeitspanne (Tₐᵤₜₐᵣₖ) nur bis zum Erreichen der Ausgangsspannung (Ua) reicht. Die im Autarkiekondensator (C) verbleibende Restspannung kann nicht genutzt werden, da der DC/DC-Abwärtswandler (2) diese nicht mehr verwerten kann.

Aus der EP 0 183 597 ist darüber hinaus bereits eine schaltungsanordnung zur kurzzeitigen Aufrechterhaltung einer Ausgangsspannung (Vs in Fig. 2 der EP 0183597) bei Ausfällen einer Eingangsspannung mittels eines Autarkiekondensators (2) zu entnehmen, bei der im Autarkiekondensator eine mittels eines Spannungsverstärkers (11) erhöhte Versorgungsspannung (Vs) gespeichert wird. Beim Wegfall der Eingangsspannung (Ve) wird mittels eines vom Detektor (14) gesteuerten Schalters (12) der Autarkiekondensator (2) vom Ausgang des Spannungsverstärkers (11) getrennt und über einen Spannungserniedriger (6), **also gerade nicht direkt,** mit dem Eingang Spannungsverstärkers (11) verbunden.

Der Spannungserniedriger (6) führt jedoch somit gerade dem Eingang des Spannungsverstärkers (11) eine gegenüber der Kondensatorspannung (Vs) reduzierte Spannung (V2) zu, so dass aufgrund der Verlustleistung im Spannungserniedriger (6) die im Autarkiekondensator gespeicherte Energie nicht im vollem Umfang ausgenutzt wird und die Autarkiezeit dementsprechend kurz ist.Aufgabe der Erfindung ist es daher, ein Verfahren sowie eine Schaltungsanordnung aufzuzeigen, durch welches die im Autarkiekondensator gespeicherte Energie besser ausgenutzt und so die Autarkiezeitspanne verlängert wird.

Diese Aufgabe wird durch die kennzeichnenden Merkmale des Anspruchs 1 sowie für die Schaltungsanordnung nach Anspruch 2 gelöst. Vorteilhafte Weiterbildungen sind den Ansprüchen 3 und 4 zu entnehmen.

Indem im Autarkiefall die Kondensatorspannung direkt auf den Eingang des DC/DC-Aufwärtswandler geschaltet wird, kann dieser die im Laufe der Autarkiezeitspanne absinkende Kondensatorspannung aufwärts transformieren und am Ausgang eine nahezu konstante Spannung aufrechterhalten, die der im System benötigten Spannung entspricht, die der DC/DC-Abwärtswandler dann auf das Ausgangsspannungsniveau transformiert. Diese Stabilisierung kann gleichzeitig zu einer kurzfristigen Autarkieversorgung weiterer Lastelemente, die mit der Zwischenspannung betrieben werden, genutzt werden, indem diese einen Spannungsabgriff am Eingang des DC/DC-Abwärtswandlers aufweisen. Eine Diode am Eingang des DC/DC-Aufwärtswandlers schützt vor einer Entladung des Autarkiekondensators in Richtung der Eingangsspannung.

Technologisch begrenzt wird Autarkiezeit durch die aber recht geringe Mindestspannung eines DC/DC-Aufwärtswandlers sowie die Stromaufnahme, die entsprechend steigt. Jedoch kann der Autarkiekondensator weiter entladen und die Autarkiezeitspanne deutlich verlängert werden.

Die Erfindung wird nachfolgend anhand von Ausführungsbeispielen und Figuren näher erläutert.

Kurze Beschreibung der Figuren:
- Figur 1: schaltungsanordnung mit schaltelement am Autarkiekondensator
- Figur 2: Schaltungsanordnung gemäß dem Stand der Technik
- Figur 3: Verlauf der Ausgangsspannung in einer Schaltungsanordnung gemäß Figur 1
- Figur 4: Verlauf der Ausgangsspannung in einer Schaltungsanordnung gemäß Figur 2 (Stand der Technik)
- Figur 5: Weiterbildung der Schaltungsanordnung mit einer eingangsseitig angeordneten Diode

Figur 1 zeigt eine Schaltungsanordnung mit einem Schaltelement am Autarkiekondensator zur Durchführung des erfindungsgemäßen Verfahrens die am Eingang E anliegende Eingangsspannung Ue wird einem DC/DC-Aufwärtswandler 1 auf eine höhere zwischenspannung Uz transformiert. Wie auch aus dem Stand der Technik bekannt, wird dabei das Spannungsniveau stabilisiert und weitgehend von der Eingangsspannung Ue unabhängig. Die Zwischenspannung Uz wird im Normalbetrieb dem Kondensator C zugeführt und dort als Kondensatorspannung Uc gespeichert. Das Schaltelement S befindet sich dazu im Schaltzustand S1 und verbindet den Zwischenpunkt Z mit dem Kondensator C. Die Kondensatorspannung Uc ist somit identisch der Zwischenspannung Uz und wird von einem DC/DC-Abwärtswandler 2 auf das vorgegebene Niveau der Ausgangsspannung Ua transformiert und im angedeuteten Lastelement L1 zugeführt. Des weiteren ist eine Steuereinheit 3 gezeigt, die die Eingangsspannung ue erfaßt und mit einem vorgegebenen Sollwert Usoll vergleicht. Die Steuereinheit 3 kann das steuerbare Schaltelement S zwischen den Schaltzuständen S1, also zwischen Z und C, oder auf den Schaltzustand S2 schalten, der den Kondensator C mit dem Eingang des DC/DC-Aufwärtswandlers 1 verbindet.

Figur 2 wurde bereits im Stand der Technik beschrieben.

Der Ablauf des Verfahrens soll anhand von Figur 3 unter Zuhilfenahme der Figur 1 erläutert werden. Tritt zum Zeitpunkt t₀ ein Abfall der Eingangsspannung Ue unter den Sollwert Usoll auf, wird die Steuereinheit 3 das Schaltelement S vom Schaltzustand S1 auf den Schaltzustand S2 Schalten und somit den Kondensator C Ausgang des DC/DC-Aufwärtswandlers 1 auf dessen Eingang schalten. Bis zum Zeitpunkt t1 ist die Kondensatorspannung Uc größer als die am Ausgang A erforderliche Ausgangsspannung Ua, so daß diese selbstverständlich auf dem geforderten Niveau gehalten werden kann, während jedoch bei Schaltungsanordnungen gemäß dem, Stand der Technik nach dem Erreichen des Zeitpunktes t₁ der DC/DC-Abwärtswandler 2 die Ausgangsspannung Ua nicht mehr konstant halten kann und diese analog der Kondensatorspannung Uc abfällt (vergleiche Figur 4), kann der DC/DC-Aufwärtswandler 1 die nun auf den Eingang geschaltete Kondensatorspannung Uc aufwärts transformieren und somit die Zwischenspannung Uz so lange konstant halten, bis der Kondensator C weitgehend entladen ist. Durch die Aufrechterhaltung einer hohen Zwischenspannung Uz kann der DC/DC-Abwärtswandler die Ausgangsspannung Ua deutlich länger aufrechterhalten. Die Autarkiezeit Tₐᵤₜₐᵣₖ verlängert sich somit bis zum Zeitpunkt t₂.

Sollte die Eingangsspannung Ue den vorgegebenen Sollwert Usoll wieder übersteigen so wird die Steuereinheit 3 das Schaltmittel S wieder auf den Schaltzustand S1 stellen und der Kondensator C mit der vom DC/DC-Aufwärtswandler 1 erzeugten zwischenspannung Uz aufgeladen.

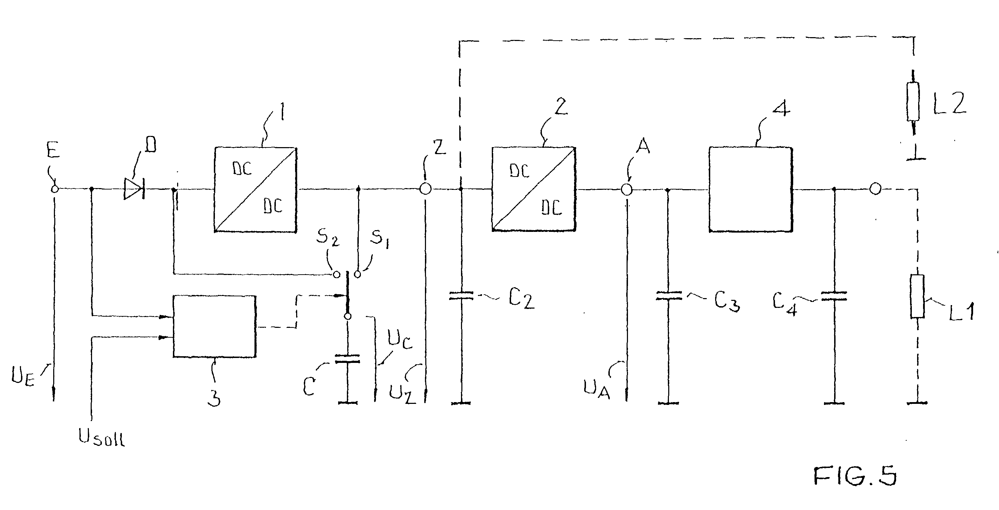

Figur 5 zeigt nun eine Weiterbildung des in Figur 1 gezeigten Ausführungsbeispiels bei dem zwischen dem Eingang E und dem Eingang des DC/DC-Aufwärtswandlers 1 eine Diode D angeordnet, die so gerichtet ist, daß kein Strom vom Autarkiekondensator C in Richtung der Eingangsspannung Ue abfließen kann, wenn der Autarkiekondensator C auf den Eingang des DC/DC-Aufwärtswandlers 1 geschaltet ist. Außerdem ist am Zwischenpunkt Z parallel zum Ausgang A ein weiterer Kondensator C2 angeordnet, der als Stabilisierungskondensator für die Zwischenspannung Uz wirkt. Am Ausgang A ist vor dem eigentlichen Lastelement L1 noch ein dritter Kondensator C3 parallel zum Lastelement angeordnet, der ebenfalls stabilisierende Funktion über die Ausgangsspannung Ua hat und die zunächst einem Längsregler 4 zugeführt wird. Die von diesem wiederum erzeugte Ausgangsspannung wird einem vierten Kondensator C4 parallel zum Lastelement L1 zugeführt.

Außerdem ist in Fig. 5 ein weiteres Lastelement L2 angedeutet, welches die Zwischenspannung Uz am Zwischenpunkt Z als eigene, stabilisierte Arbeitsspannung abgreift und somit auch unter den kurzzeitigen Autarkieschutz fällt. Die Autarkiezeit ist annähernd mit der in der Fig. 3 gezeigten identisch, da ja Uz aus Uc mittels des DC/DC-Aufwärtswandlers 1 abgeleitet wird. Die schaltungstechnische Ausgestaltung der einzelnen Baugruppen liegt im Bereich des fachmännischen Könnens und läßt vielfältige Varianten einschließlcih der Verwendung handelsüblicher Baugruppen zu.

## Patentansprüche

1. Verfahren zur kurzzeitigen Aufrechterhaltung einer Ausgangsspannung (Ua) für ein Lastelement (L1) bei Ausfällen einer Eingangsspannung (Ue) mittels eines parallel zum Lastelement (L1) geschalteten Autarkiekondensators (C),
insbesondere für elektronische Baugruppen in Kraftfahrzeugen,
wobei die Eingangsspannung (Ue) von einem DC/DC-Aufwärtswandler (1) auf eine höhere Kondensatorspannung (Uc) transformiert, diese im Autarkiekondensator (C) gespeichert wird und die Kondensatorspannung (Uc) von einem DC/DC-Abwärtswandler (2) auf die Ausgangsspannung (Ua) für das Lastelement (L1) transformiert wird, die kleiner ist als die Kondensatorspannung (Uc),
wobei die Eingangsspannung (Ue) mit einem vorgegebenen Sollwert (Usoll) verglichen wird und beim Abfallen der Eingangsspannung (Ue) unter den Sollwert (Usoll) der Autarkiekondensator (C) vom Ausgang des DC/DC-Aufwärtswandlers (1) getrennt und **direkt** mit dem Eingang des DC/DC-Aufwärtswandlers verbunden wird.

2. schaltungsanordnung zur kurzzeitigen Aufrechterhaltung einer Ausgangsspannung (Ua) für ein Lastelement (L1) bei Ausfällen einer Eingangsspannung (Ue) mittels eines parallel zum Lastelement (L1) geschalteten Autarkiekondensators (C),
insbesondere für elektronische Baugruppen in Kraftfahrzeugen,
wobei die Eingangsspannung (Ue) von einem DC/DC-Aufwärtswandler (1) auf eine höhere Kondensatorspannung (Uc) transformiert, diese im Autarkiekondensator (C) gespeichert wird und die Kondensatorspannung (Uc) von einem DC/DC-Abwärtswandler (2) auf die Ausgangsspannung (Ua) für das Lastelement (L1) transformiert wird, die kleiner ist als die Kondensatorspannung (Uc),
eine Steuereinheit (3) vorgesehen ist, die die Eingangsspannung (Ue) mit einem vorgegebenen Sollwert (Usollₗ) vergleicht und beim Abfallen der Eingangsspannung (Ue) unter den Sollwert (Usoll) ein steuerbares Schaltelement (S) aktiviert, welches den Autarkiekondensator (C) vom Ausgang des DC/DC-Aufwärtswandlers (1) trennt und direkt mit dem Eingang des DC/DC-Aufwärtswandlers verbindet.

3. Schaltungsanordnung nach Anspruch 2, **wobei** zwischen dem Eingang des DC/DC-Aufwärtswandlers (1) und der Eingangsspannung (Ue) eine Diode (D) vorgesehen und so gerichtet ist, daß kein Strom vom auf den Eingang des DC/DC-Aufwärtswandlers (1) geschalteten Autarkiekondensator (C) in Richtung der Eingangsspannung (Ue) abfließen kann.

4. Schaltungsanordnung nach einem der Ansprüche 2 oder 3, **wobei** am Eingang des DC/DC-Abwärtswandler (2) ein Spannungsabgriff für ein weiteres Lastelement (L2) vorgesehen ist, welches somit mit einer stabilisierten und autarkiegeschützten Zwischenspannung (Uz) versorgt wird.

## Claims

1. Method of temporarily maintaining an output voltage (Ua) for a load element (L1) in the event of failure of an input voltage (Ue) by means of an autarkic capacitor (C) connected in parallel to the load element (L1),
in particular for electronic modules in motor' vehicles,
wherein the input voltage (Ue) is transformed by a d.c./d.c. step-up transformer (1) into a higher capacitor voltage (Uc), the latter is stored in the autarkic capacitor (C) and the capacitor voltage (Uc) is transformed by a d.c./d.c. step-down transformer (2) into the output voltage (Ua) for the load element (L1), which output voltage (Ua) is lower than the capacitor voltage (Uc),
wherein the input voltage (Ue) is compared to a preselected setpoint value (Usoll) and, in the event of the input voltage (Ue) dropping below the setpoint value (Usoll), the autarkic capacitor (C) is disconnected from the output of the d.c./d.c. step-up transformer (1) and connected **directly** to the input of the d.c./d.c. step-up transformer.

2. Circuit arrangement for temporarily maintaining an output voltage (Ua) for a load element (L1) in the event of failure of an input voltage (Ue) by means of an autarkic capacitor (C) connected in parallel to the load element (L1),
in particular for electronic modules in motor vehicles,
wherein the input voltage (Ue) is transformed by a d.c./d.c. step-up transformer (1) into a higher capacitor voltage (Uc), the latter is stored in the autarkic capacitor (C) and the capacitor voltage (Uc) is transformed by a d.c./d.c. step-down transformer (2) into the output voltage (Ua) for the load element (L1), which output voltage (Ua) is lower than the capacitor voltage (Uc),
a control unit (3) is provided, which compares the input voltage (Ue) to a preselected setpoint value (Usoll) and, in the event of the input voltage (Ue) dropping below the setpoint value (Usoll), activates a controllable switch element (S), by means of which the autarkic capacitor (C) is disconnected from the output of the d.c./d.c. step-up transformer (1) and connected **directly** to the input of the d.c./d.c. step-up transformer.

3. Circuit arrangement according to claim 2, **wherein** a diode (D) is provided between the input of the d.c./d.c. step-up transformer (1) and the input voltage (Ue) and is directed in such a way that no current may flow off from the autarkic capacitor (C), which is connected to the input of the d.c./d.c. step-up transformer (1), in the direction of the input voltage (Ue).

4. Circuit arrangement according to one of claims 2 or 3, **wherein** provided at the input of the d.c./d.c. step-down transformer (2) is a voltage tap for a further load element (L2), which is therefore supplied with a stabilized and autarky-protected intermediate voltage (Uz).

## Revendications

1. Procédé de maintien temporaire d'une tension de sortie (Ua) pour un élément de charge (L1) dans le cas d'une coupure d'une tension d'entrée (Ue) au moyen d'un condensateur d'autarcie (C) monté en parallèle sur l'élément de charge (L1),
en particulier pour des ensembles électroniques de véhicules,
selon lequel la tension d'entrée (Ue) est transformée par un convertisseur élévateur continu/continu (1) en une tension de condensateur accrue (Uc), celle-ci est stockée dans le condensateur d'autarcie (C) et la tension de condensateur (Uc) est transformée par un convertisseur abaisseur continu/continu (2) en tension de sortie (Ua) pour l'élément de charge (L1), qui est inférieure à la tension de condensateur (Uc),
selon lequel la tension d'entrée (Ue) est comparée à une valeur de consigne prescrite (U_{consigne}) et, lors de la chute de la tension d'entrée (Ue) au-dessous de la valeur de consigne (U_{consigne}) du condensateur d'autarcie (C), est séparée de la sortie du convertisseur élévateur continu/continu (1) et reliée directement à l'entrée du convertisseur élévateur continu/continu.

2. Circuit de maintien temporaire d'une tension de sortie (Ua) pour un élément de charge (L1) en cas d'une coupure d'une tension d'entrée (Ue) au moyen d'un condensateur d'autarcie (C) monté en parallèle sur l'élément de charge (L1)
en particulier pour des ensembles électroniques de véhicules,
dans lequel la tension d'entrée (Ue) est transformée par un convertisseur élévateur continu/continu (1) en une tension de condensateur accrue (Uc), celle-ci est stockée dans le condensateur d'autarcie (C) et la tension de condensateur (Uc) est transformée par un convertisseur abaisseur continu/continu (2) en tension de sortie (Ua) pour l'élément de charge (L1), qui est plus faible que la tension de condensateur (Uc),
une unité de commande (3) est prévue, qui compare la tension d'entrée (Ue) à une valeur de consigne (U_{consigne}) prescrite et lors de la chute de la tension d'entrée (Ue) au-dessous de la valeur de consigne (U_{consigne}) un élément de commutation (SD) est activé, qui sépare le condensateur d'autarcie (C) de la sortie du convertisseur élévateur continu/continu (1) et le relie directement à l'entrée du convertisseur élévateur continu/continu.

3. Circuit selon la revendication 2, dans lequel entre l'entrée du convertisseur élévateur continu/continu (1) et la tension d'entrée (Ue) une diode (D) est prévue et polarisée de sorte de sorte qu'aucun courant ne puise circuler depuis le condensateur d'autarcie (C) monté à l'entrée du condensateur élévateur continu/continu (1) en direction de la tension d'entrée (Ue).

4. Circuit selon l'une des revendications 2 ou 3, dans lequel à l'entrée du convertisseur abaisseur continu/continu (2) est prévu un prélèvement de tension pour un autre élément de chargé (L2), qui est ainsi alimenté par une tension intermédiaire (Uz) stabilisée et protégée en autarcie.
